**Europäisches Patentamt**

**European Patent Office**

**Office européen des brevets**

(19)

(11) Veröffentlichungsnummer: **0 187 837**
**B1**

(12)

# EUROPÄISCHE PATENTSCHRIFT

(45) Veröffentlichungstag der Patentschrift:
**29.03.89**

(51) Int. Cl.⁴: **H 04 N 1/40**

(21) Anmeldenummer: **85903651.9**

(22) Anmeldetag: **11.07.85**

(86) Internationale Anmeldenummer:
**PCT/DE 85/00239**

(87) Internationale Veröffentlichungsnummer:
**WO 86/00770 (30.01.86 Gazette 86/03)**

(54) **VERFAHREN ZUR HERSTELLUNG VON DRUCKZYLINDERN FÜR NAHTLOS- BZW. ENDLOSMUSTER MITTELS DRUCKFORM- GRAVIERMASCHINEN.**

(30) Priorität: **12.07.84 DE 3425626**

(43) Veröffentlichungstag der Anmeldung:
**23.07.86 Patentblatt 86/30**

(45) Bekanntmachung des Hinweises auf die Patenterteilung:
**29.03.89 Patentblatt 89/13**

(84) Benannte Vertragsstaaten:
**AT BE CH DE FR GB IT LI NL SE**

(56) Entgegenhaltungen:
**DE-A-2 360 270**
**DE-A-2 529 319**
**DE-A-3 129 649**
**DE-A-3 230 719**
**US-A-4 054 916**

(73) Patentinhaber: **DR. ING. RUDOLF HELL GMBH,**
**Grenzstr. 1-5, D-2300 Kiel (DE)**

(72) Erfinder: **DÖLVES, Jürgen, Labooer Weg 44a,**
**D-2305 Heikendorf (DE)**
Erfinder: **SCHROEDTER, Wolfgang, Charles- Ross-**
**Ring 96, D-2300 Kiel 1 (DE)**

EP 0 187 837 B1

## Beschreibung

### Technisches Gebiet

Die vorliegende Erfindung betrifft ein Verfahren zur Herstellung von Druckzylindern für Nahtlos- bzw. Endlosmuster mittels Druckform-Graviermaschinen mit Abtast- und Gravurzylinder, wobei eine Mustervorlage auf dem Abtastzylinder bildpunktweise entlang nebeneinanderliegender Abtastlinien, die in Umfangstichtung des Abtastzylinders verlaufen, optoelektronisch abgetastet wird und jede Abtastlinie die Information für eine auf dem Gravurzylinder zu übertragende Gravurlinie eines Musterrapports liefert.

### Zugrundeliegender Stand der Technik

In der Drucktechnik sind Druckform-Graviermaschinen im Einsatz, mit denen Druckformen zum Drucken von Nahtlos- und Endlosmustern graviert werden. Ein Beispiel für solche Endlosmuster ist ein Holzdekor, zu dessen Herstellung eine Druckform verwendet wird, die ein endloses Muster aufweist. Für die Herstellung solcher Muster werden Mustervorlagen verwendet, die z. B. durch fotografieren eines echten Holzmusters und durch anschließende Retusche hergestellt werden. Die Schwierigkeit bei der Wiedergabe des Musters besteht darin, die Nahtstelle zwischen Anfang und Ende des Musters zum Verschwinden zu bringen, weil eine Stoßstelle im Endlosmuster für das Auge sofort erkennbar ist. Hierzu wird die Vorlage am Anfang und Ende retuschiert, so daß ein möglichst gleichmäßiger Übergang zwischen dem Dekorverlauf von Anfang und Ende des Musters bzw. der Vorlage erfolgen soll. Trotzdem ist bei dieser Technik die Nahtstelle im endgültigen Druckprodukt meistens noch erkennbar. Zur Unterdrückung verbleibender Restnahtstellen ist es z. B. in der DE-C-1 652 340 und in der DE-A-3 129 649 bekannt, die Mustervorlage so herzustellen, daß sie länger als der Musterrapport ist, wobei mit Musterrapport die Länge des Grundmusters bezeichnet wird.

Bei der DE-C-1 652 340 wird die Umschaltstelle, d. h. die Stoßstelle, in den Musteranfang und in die Musterverlängerung verlegt. Es tritt hiermit eine Verbesserung gegenüber dem einfachen Fall ein, daß Musteranfang und -ende aneinander anschließen und der Übergang an der Stoßstelle nur mittels der Retusche von Musteranfang und -ende vermieden werden soll. Die Nahtstelle bleibt aber in einer Vielzahl von Fällen trotzdem erkennbar, da z. B. Holz als Naturprodukt unregelmäßig wächst und die Maserungen am Musteranfang und -ende oft zu stark voneinander abweichen, als daß diese Abweichung wegretuschiert werden kann.

Bei der DE-A-3 129 649 werden bei der Vorlagenabtastung die Bildsignale, die durch Abtastung des über den Musterrapport hinausgehenden Teils der Vorlage gewonnen werden, mit den Bildsignalen, die durch Abtastung des Vorlagenanfangs gewonnen werden, in einem Mischbereich zur Erzeugung eines stetigen Übergangs zwischen dem Signalpegel am Anfang des Musterrapports und dem Signalpegel am Ende des Musterrapports mittels eines Computers gemischt. Hier findet zwar ein stetiger Übergang statt, da aber der Mischbereich immer am Anfang der Vorlage beginnt und eine vorgeschriebene Länge hat, entsteht in dem mit einer solchen Druckform gedruckten Muster trotzdem ein Streifen, der von dem übrigen Muster in seiner Musterstruktur abweicht und als sich nach jedem Rapport wiederholende Störstelle vom Auge erkannt wird. Diese vorgeschlagenen Einzelmaßnahmen bringen zwar Verbesserungen bei der Musterangleichung, aber das Ergebnis ist bei den einzelnen Verfahren nicht befriedigend.

### Offenbarung der Erfindung

Der vorliegenden Erfindung liegt daher die Aufgabe zugrunde, ein Verfahren zur Herstellung von Druckzylindern für Nahtlos- bzw. Endlosmuster mittels Druckform-Graviermaschinen anzugeben, bei dem die Erkennbarkeit des Musterübergangs von Musteranfang und Musterende bei der Wiedergabe eines sich wiederholenden Dekors gänzlich vermieden wird.

Die Erfindung erreicht dies durch die im kennzeichnenden Teil des Anspruchs 1 angegebenen Merkmale. Vorteilhafte Weiterbildungen sind in den Unteransprüchen 2 - 6 angegeben. Die Erfindung wird im folgenden anhand der Figuren 1 bis 10 näher erläutert.

Es zeigen:

Kurze Beschreibung der Erfindung

Fig. 1     eine Vorlage mit einer Maske am Anfang der Vorlage,

Fig. 2     eine Vorlage mit einer Maske am Ende der Vorlage,

Fig. 3     ein Beispiel für eine Schaltung zur Maskenerkennung,

Fig. 4     ein Schaltungsbeispiel zur Feststellung der Länge der Maskenerkennung,

Fig. 5     ein weiteres Beispiel zur Feststellung der Länge der Maskenerkennung,

Fig. 6     ein Schaltungsbeispiel für die Maskenabtastung,

Fig. 7     ein Schaltungsbeispiel zur Feststellung der Maskenlänge,

Fig. 8     ein weiteres Beispiel zur Feststellung der Maskenlänge,

Fig. 8a     ein Beispiel für Erkennungsmuster,

Fig. 9     ein Schaltungsbeispiel für den Mischvorgang und

Fig. 10 Taktschemata für die Durchführung der Erfindung.

**Bevorzugte Ausführungsform der Erfindung**

Bei der Durchführung der vorliegenden Erfindung wird von einer Druckform-Graviermaschine ausgegangen, wie sie z. B. in der DE-C-2 508 734, entspricht US-A-4,013,829, beschrieben ist. Bei diesem Patent wird eine Vorlage auf dem Abtastzylinder der Graviermaschine bildpunktweise entlang nebeneinanderliegender Abtastlinien, die in Umfangsrichtung des Abtastzylinders verlaufen, opto-elektronisch abgetastet, und die Länge einer Abtastlinie der Vorlage entspricht der Länge einer Gravurlinie auf dem Gravurzylinder. Dieser Graviermaschine, die mit einer Zwischenspeicherung der Abtastlinien arbeitet, wird mittels einer dort beschriebenen Maßstabselektronik durch unterschiedliche Speichereingabe- und Auslesegeschwindigkeiten die Länge der Abtastlinie an die Länge der Gravurlinie auf dem Gravurzylinder angepaßt. Hierzu wird jede Abtastlinie von ihrem Anfang, d. h. Bildlinienstart ausgehend, in einen Speicher eingeschrieben, der so viele Speicherplätze hat, daß die längste Abtastlinie aufgenommen werden kann. Die Einspeicherung erfolgt derart, daß vom Bildlinienstart aus die aufeinanderfolgenden Bildpunkte einer Abtastlinie unter aufsteigender Adresse des Speichers nacheinander abgelegt werden.

Die Gravur erfolgt derart, daß die Bildpunktinformationen wieder von einem Gravurlinienstart aus, der nicht mit dem Bildlinienstart übereinstimmen muß, aus dem Bildlinienspeicher sukzessiv ausgelesen werden. Im Falle, daß der Gravurlinienstart nicht mit dem Bildlinienstart übereinstimmt, wird das Auslesen des Bildlinienspeichers von der dem Gravurlinienstart entsprechenden Adresse aus gestartet, und der Teil der Bildlinie, der vor diesem Startpunkt liegt, wird nach dem Ende der Bildlinie von der Anfangsadresse aus bis zur Adresse, die dem Startpunkt entspricht, ausgelesen. Durch die Veränderbarkeit von Speichereingabe und -ausgabe-Frequenz können die Längen der Abtast- und Gravurlinien gleichgemacht werden, wodurch gewährleistet ist, daß zwischen Vorlagenanfang und Vorlagenende kein freier Raum auf dem Gravierzylinder ist, d. h. die Bildpunkte von Vorlagenanfang und Vorlagenende schließen sich bei der Gravur lückenlos aneinander. Eine Anpassung von Musteranfang und -ende bezüglich der Vermeidung einer sichtbaren Nahtstelle ist hierdurch noch nicht gegeben.

Bei der vorliegenden Erfindung wird die Abtastvorlage darüber hinaus so retuschiert, daß Rapportanfang und Rapportende im Muster möglichst übereinstimmen, wobei die Vorlage länger ist als der zu übertragende Musterrapport. Die Bildsignale, die durch Abtastung des über den Musterrapport hinausgehenden Teils der Vorlage gewonnen werden, werden mit den Bildsignalen, die durch Abtastung des Vorlagenanfangs gewonnen werden, in einem Mischbereich zur Erzeugung eines stetigen Übergangs zwischen dem Signalpegel am Anfang des Musterrapports und dem Signalpegel am Ende des Musterrapports gemischt. Die Mischung solcher Signale entsprechend einer Mischfunktion ist z. B. in der DE-C-2 708 421, entspricht US-A-4,255,761 und US-A-4,403,249, beschrieben.

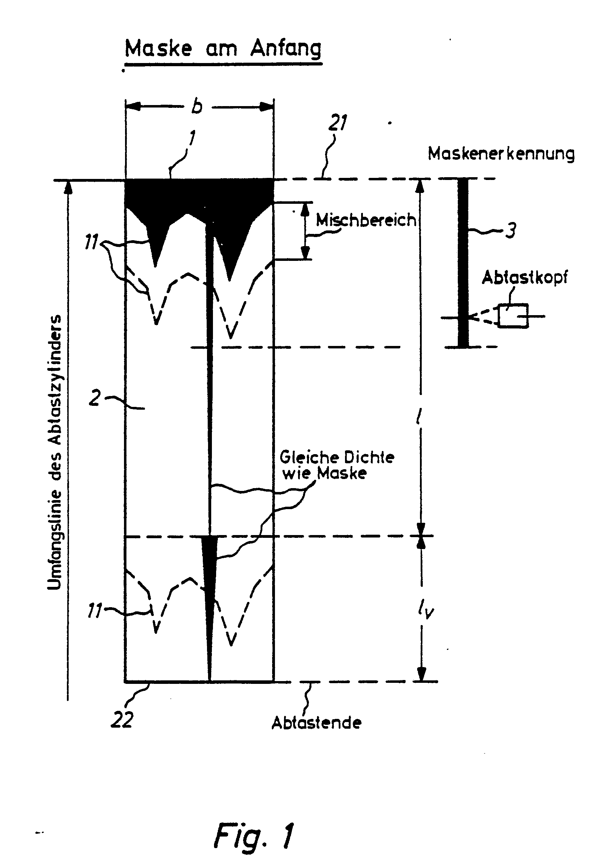

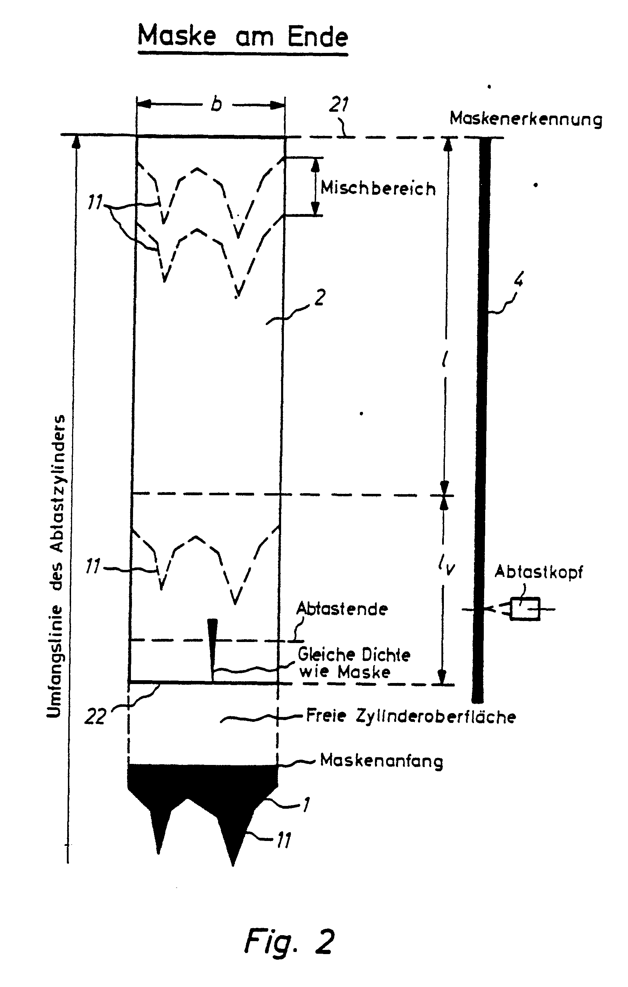

Die Figur 1 dieses Patentes zeigt eine entsprechende Schaltung für die Signalmischung, und in Figur 2 ist der Mischvorgang selbst dargestellt. Die Länge des Mischbereichs wird bei der vorliegenden Erfindung in vorteilhafter Weise vorgegeben und nicht wie bei der DE-C-2 708 421 durch den Durchmesser einer den Übergang abtastenden Blende bestimmt. Dadurch, daß die Abtastsignale der Vorlage, d. h. das gesamte Muster mit Musterverlängerung gemäß der DE-C-2 508 734 bildlinienweise zwischengespeichert wird, kann die Signalmischung ohne weiteres durch die in der DE-C-2 708 421 in Figur 1 angegebene Schaltung vorgenommen werden.

Wie bereits eingangs erwähnt, ist bei der Mischung der Abtastsignale der Vorlagenverlängerung mit den Signalen des Vorlagenanfangs immer noch im fertigen Druck die Nahtstelle zu sehen, da der Mischbereich immer an derselben Vorlagenstelle wiederkehrt, auch wenn die Vorlage sorgfältig retuschiert worden ist. Um dies zu vermeiden, wird bei der vorliegenden Erfindung zusätzlich vorgeschlagen, den Anfang des Mischbereichs von Bildlinie zu Bildlinie zu verschieben, wozu eine entsprechende gezackte Maske zusätzlich abgetastet wird, wodurch der "Musteranfang" von Bildlinie zu Bildlinie, d. h. Abtastlinie zu Abtastlinie, in Längsrichtung des Musters unterschiedlich festgelegt wird.

Figur 1 zeigt eine solche Maske (1), die am Anfang einer Mustervorlage (2) montiert ist. Die Vorlage (2) ist in Umfangsrichtung auf dem nicht dargestellten Abtastzylinder der Graviermaschine montiert und weist vom Anfang (21) bis zum Vorlagenende (22) eine Gesamtlänge auf, die sich aus der eigentlichen Musterlänge 1 und der Länge der Vorlagenverlängerung $1_v$ zusammensetzt. Die Breite b der Vorlage sei über ihre Gesamtlänge $1 + 1_v$ konstant. Die Maske (1) weist eine Kontur (11) auf, die über die Breite b der Vorlage gesehen, ungradlinig ist, wobei bei der Generierung der Maske in vorteilhafter Weise die gezackte Kontur dem günstigsten Nahtverlauf am Musteranfang bzw. -ende angepaßt werden kann.

Die Wirkungsweise der Maskenabtastung in Verbindung mit der Vorlagenabtastung ist wie folgt:

Das Abtastorgan der Graviermaschine tastet auf jeder Bildlinie zuerst die Maske (1) ab, und eine Maskenkonturlinie (11) beginnt die Maskenabtastung. Der Schnittpunkt der Konturlinie (11) mit der jeweiligen Abtastlinie bestimmt somit den Anfang der Abtastung der Musterinformation. Nach der Länge 1 ist das Ende des Musters erreicht, durch die Schaltfunktion der Maske wurde aber der Musteranfang bis zur Maskenkontur (11) nicht abgetastet. Diese fehlende Musterinformation wird nunmehr durch Abtastung der Vorlagenverlängerung $1_v$ gewonnen, und zwar läuft die Abtastung solange in dem Bereich $1_v$ weiter, wie vorher die Maske (1) den Vorlagenanfang ausgeblendet hat. Anders ausgedrückt, von der Maskenkonturlinie (11) wird für jede Bildlinie soviel Vorlageninformation abgetastet, wie der Rapportlänge 1 des Musters entspricht.

Da die Abtastung gemäß DE-C-2 508 734 entlang der Umfangslinien des Abtastzylinders verläuft und die Abtastbildlinien von einem Abtastbildlinienstart, der mit dem Vorlagenanfang (21) übereinstimmt, gespeichert werden, ist bei der Abtastung von Maske und Vorlage gemäß Figur 1 der vorliegenden Erfindung der durch die Maske definierte Bereich des Bildlinienspeichers leer, so daß die über das Musterende im Bereich $1_v$ abgetasteten Musterdaten in den Anfangsbereich des Bildlinienspeichers abgelegt werden können und für den weiter oben beschriebenen Mischvorgang gemäß DE-C-2 708 421 bereitstehen.

Ohne den Mischvorgang gemäß DE-C-2 708 421 wäre gegenüber der DE-C-1 652 340 schon eine Verbesserung erreicht, da der Umschaltbereich für jede Abtastlinie an einer anderen Stelle als bei der DE-C-1 652 340 liegt, aber es wäre nur ein Umschalten zwischen den beiden Signalen an der entsprechenden Stelle.

Bei reiner Anwendung der DE-C-2 708 421 ist der Mischbereich aber zu klein, da er durch den Blendendurchmesser der Umfeldblende bestimmt ist und somit einem Umschaltvorgang nahekommt.

Bei der vorliegenden Erfindung wird aber in Abhängigkeit vom Muster ein Mischbereich vorgegeben, der sich an den Abtastbildlinienstart, der durch die Maskenkontur vorgegeben wird, anschließt. Durch die im Vorangegangenen beschriebene Abspeicherung der Bildpunkte von tatsächlich abgetastetem Musteranfang und über die Rapportlänge hinausgehende Vorlagenverlängerung kann aber mittels der in der DE-C-2 708 421 in Figur 1 bzw. 2 angegebenen Mischstufe unter Vorgabe der Länge des Mischbereichs ein stetiger Übergang für jede einzelne Abtastlinie erzielt werden.

Beim Mischvorgang werden aus dem Bildlinienspeicher der Graviermaschine jeweils die Bildsignale des abgetasteten Bereichs der Vorlagenverlängerung und, von der Maskenkontur (11) ausgehend, die Bildsignale des tatsächlich abgetasteten Vorlagenanfangs ausgelesen und mittels der vorgegebenen Mischfunktion gemischt.

Der Mischbereich wird vorgegeben, indem festgelegt wird, wie viele Bildsignale der Vorlagenverlängerung mit den Bildsignalen des tatsächlich abgetasteten Musteranfangs gemischt werden sollen.

In dem in Figur 1 gezeigten Beispiel ist die Maske am Anfang der Vorlage angeordnet, oder die Vorlage kann entsprechend geschwärzt sein, so daß dieser Vorlagenbereich als Maske wirkt.

In Figur 2 ist eine Variante dargelegt, bei der die Maske (1) auf dem freien Bereich des Abtastzylinders zwischen Vorlagenanfang und Vorlagenende angeordnet ist. Bei Abtastung einer Umfangslinie des Abtastzylinders wird ebenfalls der Maskenanfang erkannt und die Länge der Maske bis zur Maskenkonturlinie (11) vom Abtastorgan festgestellt und gespeichert. Läuft nun das Abtastorgan nach der Vorlagenabtastung auf einer Umfangslinie in den Vorlagenanfang hinein, so werden anhand der jeweiligen Maskenlängen der einzelnen Abtastbildlinien so viele Vorlagenanfangspunkte unterdrückt, wie die jeweilige Maskenlänge ist.

Erst dann beginnt die eigentliche Musterabtastung, d. h. der Bildlinienstart. Der anschließende Ablauf ist wie in Figur 1.

Es kann nun im Beispiel der Figur 1 vorkommen, daß in dem an die Maske anschließenden Bereich des Musters gleiche Dichten im Muster vorkommen, wie die Maske selbst, die dann auch in der Vorlagenverlängerung aufgrund der Rapportfähigkeit der Vorlage auftreten. Es wäre somit nicht möglich, den wirklichen Anfang der Vorlagenabtastung durch die Maskenkontur (11) festzulegen, das beschriebene Mischprinzip würde also nicht oder fehlerhaft arbeiten.

Um dies zu verhindern, ist weiterhin vorgesehen, am Rand der Maske oder Vorlage eine Maskenerkennung vorzunehmen, die z. B. aus einem Balken (3) bestehen kann, der in einem separaten Abtastvorgang vor der eigentlichen Masken- und Vorlagenabtastung abgetastet wird und somit ein Bereich definiert wird, den die Maske maximal annehmen kann. Die Signale, die danach abgetastet werden, werden als Mustersignale identifiziert, die Signale, die vor dem Ende der Maskenerkennung abgetastet werden, werden als Maskensignale identifiziert, die Signale, die vor dem Ende der Maskenerkennung abgetastet worden sind, werden als Mustersignale identifiziert, wenn die Maskenkontur (11) vorher überschritten worden ist und die Dichte anders als die Dichte des als Maskenerkennung abgetasteten Balkens oder einer dieser Maskenerkennung zugeordneten und vorgegebenen Maskendichte entspricht.

Ist Vorlagendichte gleich Maskendichte, so wird das Abtastsignal so lange als Maskensignal interpretiert, wie maximal die Länge der Maskensteuerung ist.

Im Beispiel der Figur 2 kann der Fall eintreten, daß die Vorlage länger ist als das Muster und die Musterverlängerung zusammen, insbesondere dann, wenn für die Musterverlängerung ein zweites identisches Muster aufgespannt wird. Kommen dann in dem Bereich des zweiten Musters hinter der Maskenverlängerung gleiche Tonwerte wie in der Maske vor, so würden diese als Maskensignale erkannt und interpretiert werden. Um dies zu verhindern, wird in diesem Fall ebenfalls mit einer Maskenerkennung gearbeitet. Es sind zwei Möglichkeiten vorgesehen. Die Maskenerkennung kann wie in Figur 1 neben der Maske als Balken 3 angeordnet sein oder man bringt neben der Vorlage eine Maskenerkennung in Form eines Balkens (4) oder entsprechend der Marken an. Die Länge des Balkens (4) erstreckt sich dann in vorteilhafter Weise vom Vorlagenanfang bis zum Ende des zweiten Musterrapports. Auch in diesem Fall ist eine klare Trennung zwischen Vorlagenabtastsignal und Maskensignal möglich, auch wenn in der Vorlage die gleiche Dichte vorkommt wie in der daran anschließenden Maske.

Es ist natürlich auch möglich, mit zwei Abtastköpfen zu arbeiten. In diesem Falle wird die Maske neben der Vorlage aufgespannt und sowohl der Maske als auch der Vorlage wird jeweils ein Abtastkopf zugeordnet, so daß diese Signale an getrennten Leitungen anfallen und dann in der vorher beschriebenen Weise für den Mischvorgang verwendet werden können.

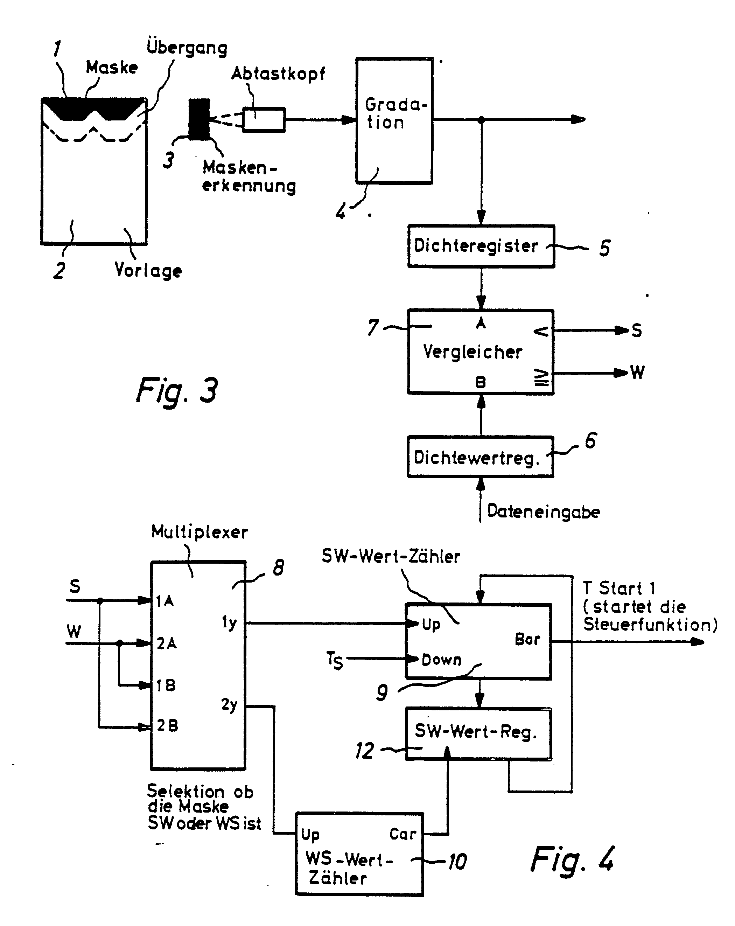

Figur 3 zeigt ein Schaltungsbeispiel zur Abtastung der Maskenerkennung 3 gemäß Figur 1 und zur Feststellung, ob Schwarz- oder Weißwerte gesehen werden.

Zu Beginn der Abtastung wird mittels des Abtastkopfes die Maskenerkennung abgetastet, um die Länge der Maskenerkennung festzustellen. Die Signale des Abtastkopfes gelangen über eine Gradationsstufe 4 zu einem Register 5. Das Register 5 ist z. B. als Baustein SN 74 233 der Firma Texas Instruments ausgelegt.

Weiterhin ist ein Dichtewert-Register 6 vorgesehen, in dem ein Dichtevergleichswert abgelegt wird, mit dem die Dichten A, die vom Abtastkopf über die Gradationsstufe 4 in das Dichteregister 5 geschrieben werden, mittels eines Vergleichers 7 mit dem Dichtewert B, der in dem Dichtewert-Register 6 abgelegt ist, verglichen werden. Wenn die vom Abtastkopf gelieferten Dichten A kleiner sind als der Dichtewert B, so wird dieser Wert als Schwarz erkannt und auf der Leitung S ausgegeben.

Ist der Dichtewert A vom Abtastkopf gleich oder größer als der Dichtewert B im Dichtewert-Speicher 6, so ist es ein Weißwert, der auf der Leitung W ausgegeben wird.

Schwarz umfaßt somit ein bestimmtes Dichtespektrum und schließt eventuell eingestreute Weißwerte aus.

Als Vergleicher 7 kann beispielsweise der Baustein SN 7483 oder LS 74681 der Firma Texas Instruments und als Dichtewert-Register 6 der Baustein SN 74 273 von Texas Instruments verwendet werden.

Die Figur 4 zeigt eine Schaltungseinrichtung zum Feststellen der Länge der Maskenerkennung 3. Die Vom Vergleicher 7 der Figur 3 gelieferten Schwarz- oder Weißwerte werden über einen Multiplexer 8 selektiert. Hierbei kann die Maskenfarbe, ob Schwarz oder Weiß, bestimmt werden. Die Maskenerkennung 3 ist also nicht an eine bestimmte Farbe gebunden. Die Schwarzwerte werden in einem Schwarzwertzähler 9 eingezählt. Ist die Maskenerkennung 3 zu Ende, so werden vom Vergleicher 7 Nicht-Schwarzwerte erkannt und diese in einen Weißwertzähler 10 gezählt. Ist der Zähler 10 gefüllt, so wird der Inhalt des Schwarzwertzählers 9 in ein Schwarzwertregister 12 geschrieben.

Mit jedem Bildlinienstart wird während der Abtastung der Inhalt des Schwarzwertregisters 12 in den Schwarzwertzähler 9 geladen und mit einem Takt $T_S$ vom Abtastlinienstart aus zurückgezählt. Ist der Zählerstand 0, so wird am Ausgang des Schwarzwertzählers 9 ein Impuls abgegeben, der als Startsignal für die Steuerfunktion des Mischvorganges dient.

Bei der Schaltung gemäß Figur 4 können folgende Bauelemente zum Einsatz kommen.

| | |
|---|---|
| Multiplexer 8: | SN 74158 |
| Weißwertzähler 10: | SN 74193 |
| Schwarzwertzähler 9: | SN 74193 |
| Schwarz/Weißwert-Register 12: | SN 74273 |
| Von Texas Instruments. | |

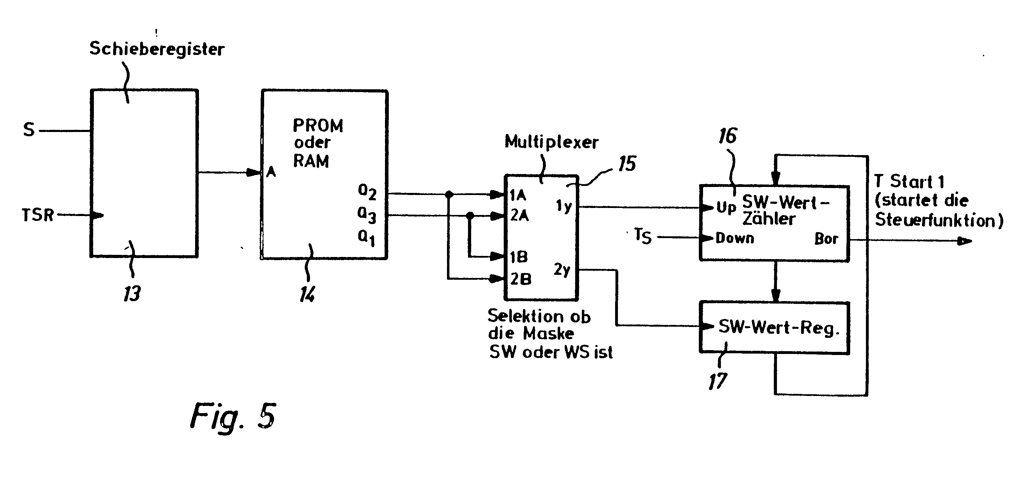

Figur 5 zeigt eine weitere Schaltungsanordnung zum Feststellen der Länge der Maskensteuerung 3, die unempfindlicher gegen das Einstreuen von Weißwerten als die Schaltungsanordnung der Figur 4 ist.

Der Schwarzwert S vom Vergleicher 7 wird in ein Schieberegister 13 geschoben. Ein H bedeutet Schwarz, und ein L dagegen Nicht-Schwarz. Nur eine bestimmte Anzahl von H-Werten im Schieberegister 13 werden als Schwarz erkannt, dagegen nur eine bestimmte Anzahl von L-Werten als Nichtschwarz.

Nach jedem Schiebetakt liegt das Ausgangssignal des Schieberegisters als Adresse an einem PROM oder RAM 14 an; und unter diesen Adressen werden aus dem PROM- bzw. RAM-Speicher die Signale $Q_1$, $Q_2$ und $Q_3$ gelesen.

Die Erkennung von Schwarz oder Weiß hängt also nicht von einem einzigen Bit ab, sondern hier werden zur Schwarz-Weiß-Erkennung die einzelnen Bits zu längeren Wörtern zusammengefaßt. Die Ausgangssignale $Q_2$ und $Q_3$ des Speichers 14 sind die aus den einzelnen Bits zusammengesetzten Werte für Schwarz und Weiß.

Mittels eines Multiplexers 15 kann wieder die Maskenfarbe selektiert werden. Die am Ausgang 1y des Multiplexers 15 erscheinenden Schwarzwerte werden in einem Schwarzwert-Zähler 16 gezählt. Bei einem Impuls am Ausgang 2y des Multiplexers 15 wird der Inhalt des Schwarzwertzählers in ein Schwarzwertregister 17 gegeben und wie in Figur 4 mit einem Takt $T_S$ heruntergezählt. Ist der Zählerstand 0, so erscheint am Ausgang des Schwarz/Weißwertzählers 16 ein Impuls, der als Startsignal für die Steuerfunktion des Mischvorgangs dient.

Als Bauelemente für die Schaltungsanordnung der Figur 5 können folgende käufliche integrierte Schaltkreise verwendet werden.

| | |
|---|---|
| Schieberegister 13: | SN 74164 |
| PROM 14: | SN 745472 |
| Multiplexer 15: | SN 74158 |
| Schwarzwertzähler 16: | SN 74193 |
| Schwarzwertregister 17: | SN 74273 |

von Texas Instruments.

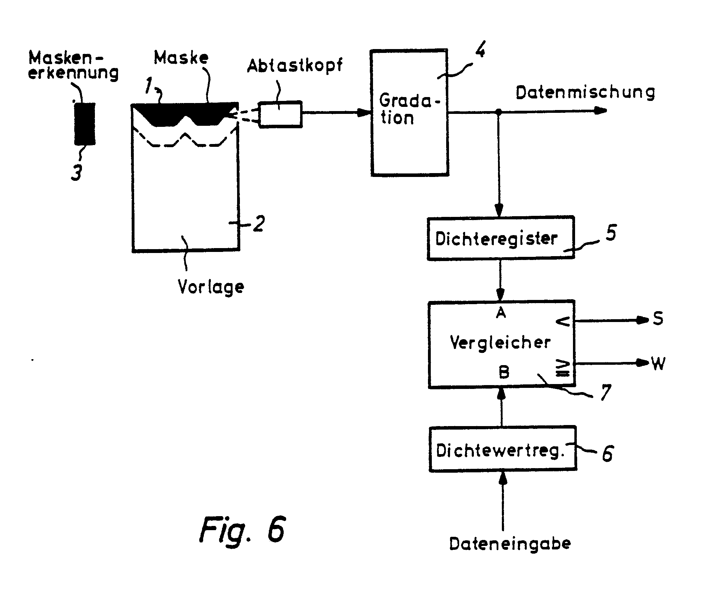

Figur 6 zeigt eine Schaltungsanordnung zur Abtastung der Maske und zur Feststellung, ob Schwarz- oder Weißwerte vom Abtastkopf gesehen werden. Der Abtastkopf tastet anstatt der Maskenerkennung in Figur 3 die eigentliche Maske 1 ab. Der weitere Verlauf der Feststellung, ob Schwarz oder Weiß erkannt werden, entspricht dem der Figur 3 weshalb in Figur 6 dieselbe Schaltung und dieselben Bauelemente wie in Figur 3 verwendet werden. Um Wiederholungen zu vermeiden, wird der Ablauf nicht nochmals beschrieben, da er mit dem der Figur 3 identisch ist.

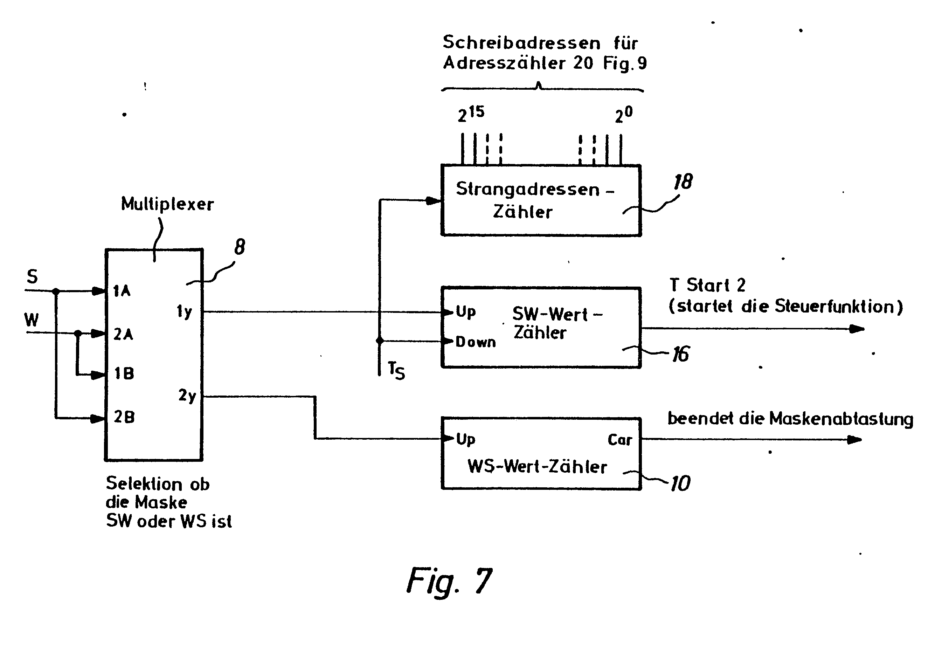

Die Figur 7 zeigt eine weitere Schaltungsanordnung zur Feststellung der Länge der Maske. Es wird im wesentlichen die gleiche Schaltung wie in Figur 4 mit einem Multiplexer 8, einem Schwarzwertzähler 16 und einem Weißwertzähler 10 verwendet, wobei im Unterschied zur Figur 4 das Schwarzwertregister 12 nicht vorhanden ist. Die vom Vergleicher 7 der Figur 6 gelieferten Schwarz- oder Weißwerte werden über den Multiplexer 8 selektiert.

Hierbei kann die Maskenfarbe, ob Schwarz oder Weiß bestimmt werden. Die Maske ist also nicht an eine betimmte Farbe gebunden. Die Schwarz/Weißwerte, die am Ausgang 1y des Multiplexers 8 erscheinen, werden in den Schwarzwert-Zähler 16 eingezählt. Ist die Maske 1 am Ende, so werden vom Vergleicher 7 Nicht-Schwarzwerte erkannt und in den Weißwertzähler 10 gezählt.

Kommt vom Multiplexer 8 eine bestimmte Anzahl von Weißsignalen W, so wird der Zähler heruntergezählt, und er gibt ein Signal ab, daß die Maskenabtastung beendet.

Der Schwarzwertzähler 16 wird von einem Takt $T_S$, der am Anfang einer Bildlinie (Abtastbildlinienstart ABS) losläuft, heruntergezählt. Dieser Takt wird außerdem an einen Strangadressenzähler 18 gegeben, dessen Zählerstand als Adresse interpretiert wird. Zu dieser Adresse wird intern in dem Strangadressenzähler ein Wert addiert, der die Länge des Übergangs des Mischbereichs angibt.

Die Summe gibt dann die jeweilige Strangadresse an. Am Ende einer normalen Abtastlinie ist der Zähler 16 auf 0 heruntergezählt, und sein Ausgangssignal gibt den Start für die Steuerfunktion des Mischvorgangs.

Für die Schaltung können mit Vorteil Folgende Bauelemente angewendet werden:

| | |
|---|---|
| Multiplexer 8 | SN 74 158 |
| Schwarzwertzähler 16 | SN 74 193 |
| Weißwertzähler 10 | SN 74 193 |
| Strangadressenzähler | SN 74 193 |

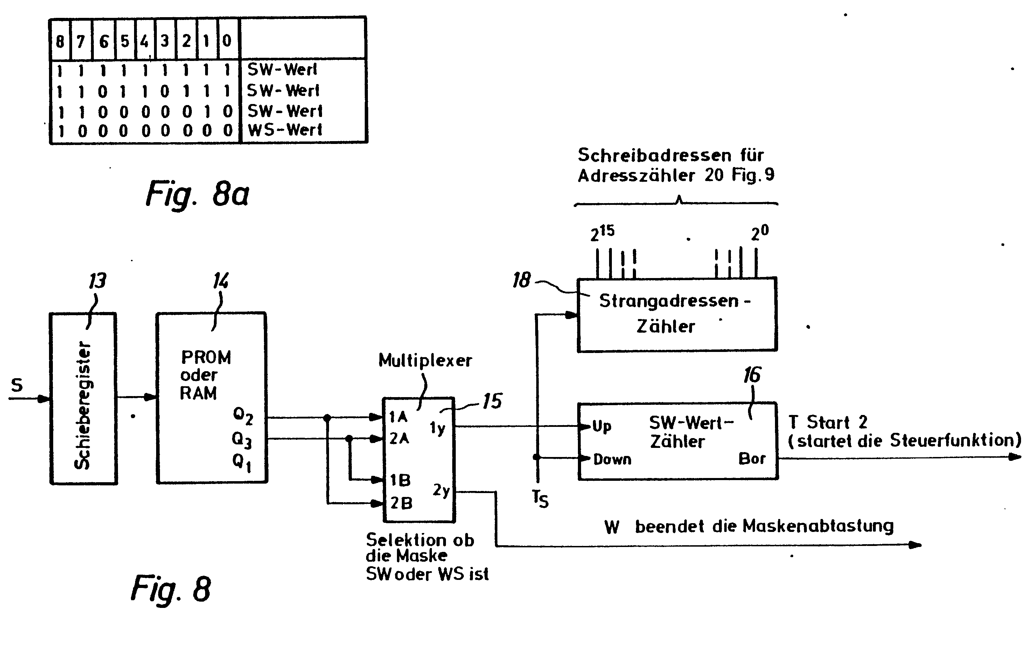

Figur 8 zeigt eine weitere Schaltung zur Erkennung der Maskenlänge. Das Schwarzsignal vom Vergleicher 7 der Figur 6 wird in ein Schieberegister 13 gegeben, das beispielsweise 9 Bit tief ist. Das Schieberegister 13 kann z. B. aus einem 8 Bit-Schieberegister bestehen, dem ein Flip-Flop für die 9. Stelle nachgeschaltet ist.

Die Selektion, ob die Maske Schwarz oder Weiß ist, wird mittels eines Multiplexers 15 vorgenommen, der an ein PROM oder RAM 11 angeschlossen ist.

Figur 8 a zeigt ein Beispiel für Erkennungsmuster, wie sie z. B. in dem PROM oder RAM 11 abgelegt sind. Je nach der angelegten Bildkombination wird dieser als Schwarz- oder als Weißwert erkannt. Über einen Multiplexer 15 wird, wenn ein Weißsignal erkannt worden ist, dieses auf eine Leitung W gegeben, wobei dieses Signal dann, wie in Figur 7, die Maskenabtastung beendet. Der Schwarzwert wird vom Ausgang 1y des Multiplexers 15 auf einen Schwarzwertzähler 16 gegeben, dem ein Strangadressenzähler 18, wie in Figur 7, parallelgeschaltet ist. Die Adressenzählung erfolgt auf gleiche Weise wie in Figur 7, weshalb, um Überholungen zu vermeiden, hier auf eine erneute Beschreibung verzichtet wird. Das Ausgangssignal des Schwarzwertzählers 16 wird ebenfalls zur Einleitung des Mischvorgangs benutzt.

In Figur 8 werden die selben Bauelemente verwendet bis auf

| | |
|---|---|
| Schieberegister 13 | SN 74 164 |
| PROM 11 | TPB 28542 |

Texas Instruments

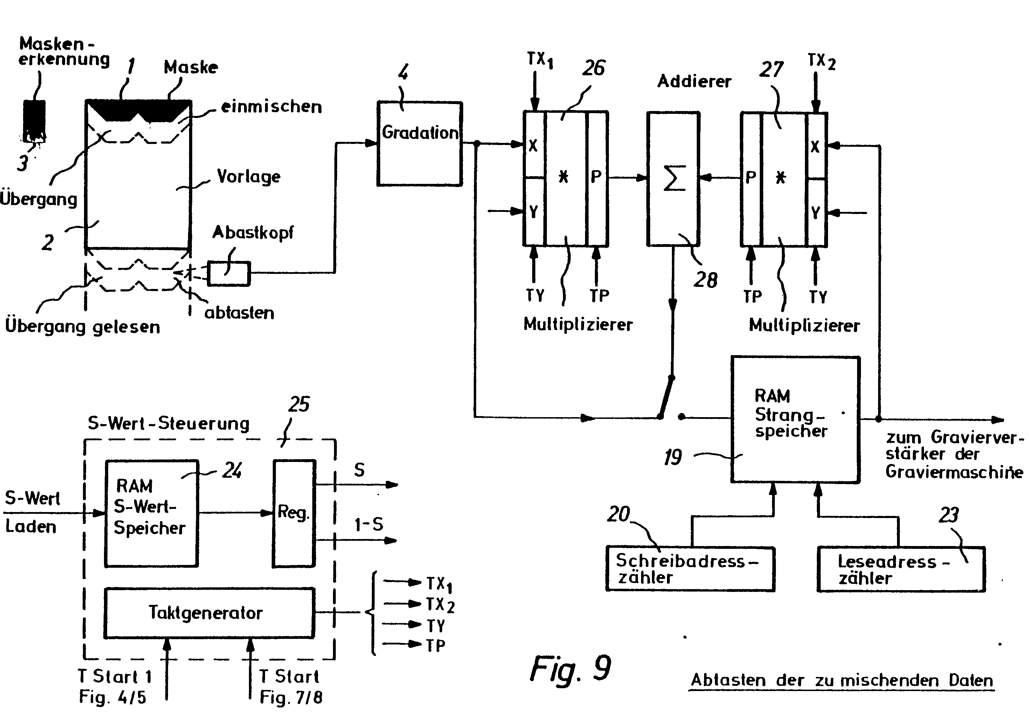

Figur 9 zeigt die eigentliche Mischschaltung, wie sie in der Figur 1 des deutschen Patentes Nr. 27 08 421 angegeben ist. Im Beispiel der Figur 9 wird mit nur einem Abtastkopf gearbeitet, wobei der zweite Abtastkopf durch einen Stranglinienspeicher 19 ersetzt ist. Der Stranglinienspeicher 19 besitzt einen Schreibadreßzähler 20 und einen Laseradreßzähler 23, durch welche die für das Schreiben und Lesen erforderlichen Adressen erzeugt und an den Speicher angelegt werden. Die Arbeitsweise der Mischschaltung ist wie folgt. Im Übergangsbereich der Vorlagen werden die Dichten, die der Abtastkopf sieht und die im Stranglinienspeicher schon abgelegt sind, vermischt, und zwar nach einer Steuerfunktion "S" und "1 - S". In einem S-Wert-Speicher 24 sind die S-Werte abgelegt, die sich von Datum zu Datum ändern, damit jedem Datum die Adresse des S-Wert-Speichers 24 geändert wird.

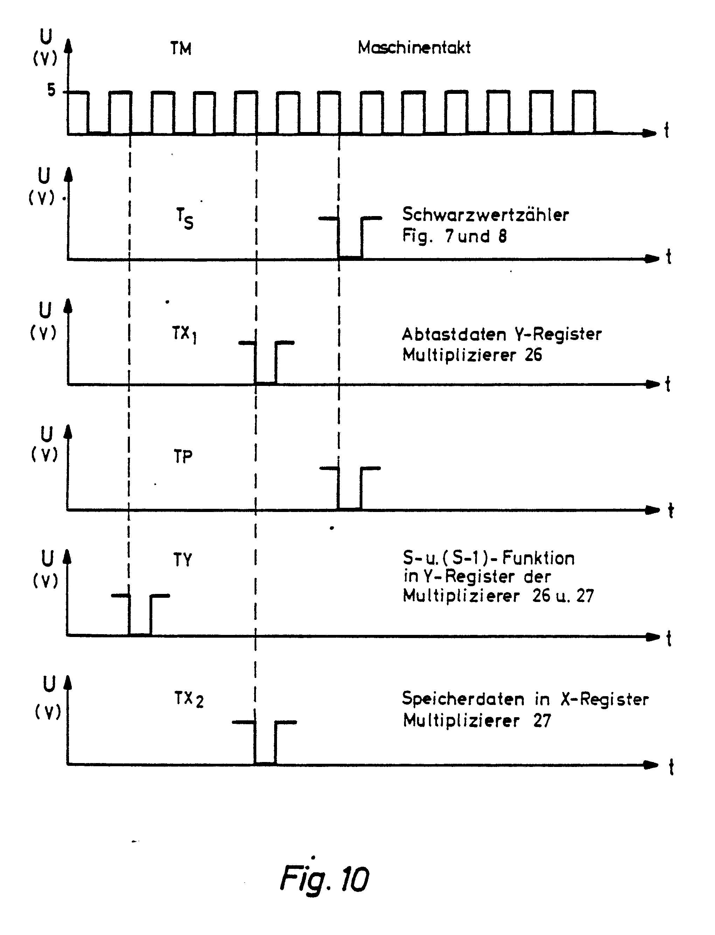

Gestartet wird die S-Wert-Steuerung mit den Takten T-Start 1 und T-Start 2. Die S-Wert-Steuerung 25 liefert zu den S-Werten auch die entsprechenden Komplemente 1-S sowie die Takte für die Multiplizierer 26 und 27. Es sind dies im einzelnen die Takte TX$_1$, TX$_2$, T$_y$, T$_p$, welche in Figuren 10 und 11 im einzelnen als Taktschema dargestellt sind.

Der Mischvorgang läuft so ab, daß der Stranglinienspeicher 19 gelesen wird und sein Inhalt mit dem Takt TX$_2$ in das X-Register des Multiplizierers 27 geschrieben wird. Unabhängig davon liefert das S-Wert-Steuerwerk 25 die Steuerfunktion S und sein Komplement 1 - S, die mit den Takten T$_Y$ in das Y-Register der beiden Muliplizierer 26 und 27 eingeschrieben wird.

Vom Abtastkopf wird die gelieferte Dichte in das X-Register des Multiplizierers 26 geschrieben. Jetzt liefert das S-Steuerwerk 25 den Takt TP, und damit erscheint die Multiplikation in den beiden P-Registern beider Multiplizierer 26 und 27. Der Multiplizierer 26 hat die Dichte, die vom Abtastkopf kommt, mit dem Wert 1 - S multipliziert und der Multiplizierer den Speicherwert aus dem Strangspeicher mit dem Wert S. Im nachfolgenden Addierer 28 werden die beiden Produkte summiert und in den Stranglinienspeicher unter der noch anstehenden Adresse eingeschrieben.

Das Ausgangssignal geht dann zum Gravierverstärker der Gravieranlage, die hier im einzelnen nicht näher dargestellt ist. Als Bauelemente für die Schaltung der Figur 9 können mit Vorteil folgende integrierte Schaltkreise verwendet werden:

| | |
|---|---|
| Multiplizierer 26 und 27 von TRW LSI Products | MPY8 HUJI |
| Addierer 28 | SN 7423 |
| S-Wert-Register | SN 74175 |
| RAM für S-Wert von Texas Instruments | SN 825212 |

Die Figuren 10 und 11 zeigen die Taktschemata, mit denen der Mischvorgang abläuft. Es wird im folgenden eine Aufstellung und Beschreibung der einzelnen Taktsymbole gegeben:

TM = Maschinentakt

T$_S$ = Zähltakt für den Schwarzwertzähler TX1 = Übernahmetakt für die Information des Abtastkopfes in das X-Register des Multiplizierers

TP = Übernahmetakt des Produktes X - Y in das Ausgangsregister des Multiplizierers.

TY = Übernahmetakt der S-Funktion in das Y-Register des Multiplizierers.

TX2 = Übernahmetakt der gelesenen Speicherdaten in das X-Register des 2. Multiplizierers.

## Patentansprüche

1. Verfahren zur Herstellung von Druckzylindern für Nahtlos- bzw. Endlosmuster mittels Druckform-Graviermaschinen mit Abtast- und einem Gravurzylinder, wobei eine Mustervorlage auf dem Abtastzylinder bildpunktweise entlang nebeneinanderliegender Abtastlinien, die in Umfangsrichtung des Abtastzylinders verlaufen, opto-elektronisch abgetastet wird und jede Abtastlinie die Information für eine auf den Druckzylinder zu übertragende Gravurlinie eines Musterrapports liefert, gekennzeichnet durch die Kombination folgender Merkmale:

a) Die Abtastvorlage ist länger als der Musterrapport,

b) die Bildsignale, die durch Abtastung des über den Musterrapport hinausgehenden Teils der Vorlage gewonnen werden, werden mit den Bildsignalen, die durch Abtastung des Vorlagenanfangs gewonnen werden, in einen vorgebbaren Mischbereich zur Erzeugung eines stetigen Übergangs zwischen dem Signal am Anfang des Musterrapports und dem Signalpegel am Ende des Musterrapports gemischt,

c) die Startpunkte der Abtastung der einzelnen Abtastlinien der Vorlagen sind vom Vorlagenanfang in Richtung der Abtastlinien unterschiedlich verschoben und bilden den Anfang des sich vom Startpunkt in Umfangsrichtung des Abtastzylinders erstreckenden vorgebbaren Mischbereichs,

d) es ist eine Steuermaske vorgesehen, die die Breite der Vorlage aufweist und einen ungradlinigen Konturverlauf über ihre Breite hat, der eine Linienführung hat, die dem günstigsten Nahtverlauf entspricht,

e) die Kontur der Maske ist gegenüber dem Vorlagenanfang verschoben und definiert den Anfang des Mischbereichs,

f) die Maske wird in gleicher Weise wie die Vorlage entlang nebeneinanderliegender Abtastlinien opto-elektronisch abgetastet, wobei das an der Kontur der Maske auftretende Signal einer jeden Maskenabtastlinie in Verbindung mit dem Maskenerkennungssignal den Startbeginn der jeweiligen Vorlagenabtastlinie bestimmt,

g) vom Startpunkt der Abtastlinien aus werden bei der Vorlagenabtastung auf jeder Vorlagenbildlinie so viele Bildpunkte der Vorlage abgetastet und gespeichert, wie dem Musterrapport entsprechen,

h) die Vorlagenabtastung läuft vom Ende des Musterrapports für jede Vorlagenabtastlinie solange in der Vorlagenverlängerung weiter, wie der Länge des Mischbereichs entspricht,

i) im Mischbereich werden für jede Abtastlinie die Bildpunkte der Vorlagenverlängerung und des Vorlagenanfangs entsprechend einer vorgegebenen Mischfunktion zu Bildpunkten mit einer neuen Dichteinformation zusammengefaßt, und für die Gravur des Druckzylinders wird der gesamte Rapport gebildet aus den sich aus der Mischung ergebenden Bildpunkten und den vom Ende des Mischbereichs bis zum Ende des Musterrapports der Linien anschließenden unveränderten Bildpunkten.

2. Verfahren nach Anspruch 1, dadurch gekennzeichnet, daß die Maske am Anfang der Vorlage derart angeordnet ist, daß Maskenanfang und Vorlagenanfang zusammenfallen.

3. Verfahren nach Anspruch 1, dadurch gekennzeichnet, daß die Vorlage selbst am Anfang als Maske ausgebildet ist, in dem sie mit einem konstanten Farbton eingefärbt ist.

4. Verfahren nach Anspruch 1, dadurch gekennzeichnet, daß die Maske hinter dem Ende der Vorlagenverlängerung in Umfangsrichtung zwischen Anfang und Ende der Vorlage angeordnet ist.

5. Verfahren nach Anspruch 1, dadurch gekennzeichnet, daß die Maske neben der Vorlage angeordnet ist und mittels eines zweiten Abtastkopfes abgetastet wird.

6. Verfahren nach einem der Ansprüche 1 - 5, dadurch gekennzeichnet, daß neben der Maske oder neben der Vorlage eine vom Abtaster vor der Maskenabtastung abzutastende Kennung vorgesehen ist, durch deren Abtastung ein Maskenerkennungssignal gewonnen und gespeichert wird, das den Bereich auf dem Umfang der Abtasttrommel festlegt, auf dem sich die Maske befindet.

## Claims

1. Method for the production of printing cylinders for seamless or endless patterns by means of printing block engraving machines comprising scanning cylinder and one engraving cylinder, a sample original being scanned opto-electronically on the scanning cylinder image dot by image dot along mutually adjacent scanning lines, which extend in the peripheral direction of the scanning cylinder and each scanning line providing the information for an engraving line of a pattern repetition which is to be transferred to the printing cylinder, characterized by the combination of the following features:

a) the scanned original is longer than the pattern repetition,

b) the image signals which are obtained by scanning the parts of the originals extending beyond the pattern repetition are mixed with the image signals which are obtained by scanning the beginning of the original within a presettable mixing range to establish an even transition between the signal at the beginning of the pattern repetition and the signal level at the end of the pattern repetition,

c) the starting points for scanning the individual scanning lines of the originals are shifted from the beginning of the original in different degrees in the direction of the scanning lines and constitute the beginning of the presettable mixing range extending from the starting point in the peripheral direction of the scanning cylinder,

d) a control mask is provided which has the width of the original and has a non-linear contour course across its width, which has a linearity setting which corresponds to the most advantageous seam course,

e) the contour of the mask is displaced with respect to the beginning of the original and defines the beginning of the mixing range,

f) the mask is scanned opto-electronically along mutually adjacent scanning lines in the same way as the original, the signal occurring at the contour of the mask of each mask scanning line determining the initial start of the original scanning line in question in conjunction with the mask recognition signal,

g) from the starting point of the scanning lines, as many image dots of the original as corresponding to the pattern repetition are scanned and stored, on each original image line during the scanning of the original,

h) the original scanning continues from the end of the pattern repetition in the extension of the original, to the extent corresponding to the length of the mixing range,

i) within the mixing range and for each scanning line, the image dots of the original extension and of the beginning of the original are combined according to a preset mixing function into image dots incorporating a new density information and for the purpose of engraving the printing cylinder, the complete pattern cycle is formed by the image dots resulting from the mixing operation and the unchanged image dots following the lines from the end of the mixing range as far as the end of the pattern repetition.

2. Method according to claim 1, characterized in that the mask is so arranged at the beginning of the original that the beginning of the mask and the beginning of the original coincide.

3. Method according to claim 1, characterized in that the original itself is constructed as a mask at the beginning, by being coloured with a uniform tint.

4. Method according to claim 1, characterized in that the mask is situated behind the end of the extension of the original in the peripheral direction between the beginning and the end of the original.

5. Method according to claim 1, characterized in that the mask is arranged beside the original and is scanned by means of a second scanner head.

6. Method according to one of the claims 1 - 5, characterized in that a coding means is provided beside the mask or beside the original which is to be scanned by the scanner prior to the scanning of the mask, the scanning of which provides a mask recognition signal which is stored, which determines the region on the periphery of the scanning drum on which the mask is situated.


**Revendications**

1. Procédé pour réaliser des cylindres d'impression destinés à des machines de gravure de matrice pour dessins sans joint ou en continu à l'aide d'un cylindre de gravure et d'un cylindre de détection, un modèle de dessin étant détecté sur le cylindre de détection, point par point le long de lignes de détection juxtaposées situées dans la direction périphérique du cylindre de détection par un moyen opto-électronique et chaque ligne de détection fournit l'information d'une ligne de gravure à transposer sur le cylindre d'impression, correspondant à un rapport de dessin, caractérisé par la combinaison des éléments suivants:

a) le modèle de détection est plus long que le rapport de dessin,

b) les signaux-image obtenus par la détection de la partie du modèle qui dépasse du rapport de dessin sont mélangés aux signaux-image obtenus par la détection du début du modèle dans une zone de mélange prédéterminée pour former une transition en continu entre le signal au début du rapport de modèle et le niveau du signal à la fin du rapport de modèle,

c) les points de départ de la détection des différentes lignes des modèles sont décalés différemment à partir du début du modèle dans la direction des lignes de détection et ces points de départ forment le début de la zone de mélange prédéterminée qui s'étend du point de départ, dans la direction périphérique du cylindre de détection,

d) il est prévu un masque de commande qui présente la largeur du modèle et comporte un tracé de contour non rectiligne dans le sens de sa largeur, qui donne un guidage de ligne correspondant au tracé le plus avantageux du joint,

e) le contour du masque est décalé par rapport au début du modèle et définit le début de la zone de mélange,

f) le masque est détecté par un moyen opto-électronique de la même manière que le modèle le long de lignes de détection juxtaposées, le signal formé au niveau du contour du masque de chaque ligne de détection du masque détermine en liaison avec le signal de reconnaissance de masque, le début du départ de la ligne de détection de modèle correspondante,

g) à partir du point de départ des lignes de détection, lors de la détection du modèle, on détecte sur chaque ligne du modèle autant de points-image du modèle que ceux qui correspondent au rapport de dessin et on met ces points-image en mémoire,

h) la détection du modèle se poursuit après la fin du rapport du dessin pour chaque ligne de détection du modèle sur le prolongement du modèle sur une longueur correspondant à la longueur de la zone de mélange,

i) dans la zone de mélange, pour chaque ligne de détection, on réunit les points-image du prolongement du modèle et du début du modèle suivant une fonction de mélange prédéterminée pour former des points-image contenant une nouvelle information de densité et pour la gravure du cylindre d'impression, on forme l'ensemble du rapport d'où découlent les points-image résultant du mélange et les points-image inchangés, adjacents entre la fin de la zone de mélange jusqu'à la fin du rapport de dessin des lignes.

2. Procédé selon la revendication 1, caractérisé en ce que le masque est disposé au début du modèle pour que le début du masque et le début du modèle coincident.

3. Procédé selon la revendication 1, caractérisé en ce que le début du modèle est en forme de masque et est teinté suivant une teinte de couleur constante.

4. Procédé selon la revendication 1, caractérisé en ce qu'après la fin du prolongement du modèle, le masque est prévu entre le début et la fin du modèle.

5. Procédé selon la revendication 1, caractérisé en ce que le masque est disposé à côté du modèle et est détecté à l'aide d'une seconde tête de détection.

6. Procédé selon l'une des revendications 1 à 5, caractérisé en ce qu'à côté du masque ou à côté du modèle, il est prévu une référence à détecter par le détecteur avant la détection du masque, cette détection donnant un signal de reconnaissance de masque qui est inscrit en mémoire et qui détermine la zone sur la périphérie du tambour de détection dans laquelle se trouve le masque.

## Maske am Anfang

Maskenerkennung

Mischbereich

Abtastkopf

Umfangslinie des Abtastzylinders

Gleiche Dichte
wie Maske

Abtastende

*Fig. 1*

# Maske am Ende

*Fig. 2*

## Fig. 3

1 — Maske
Übergang
Maske
Abtastkopf
Gradation
3 — Maskenerkennung
2 — Vorlage
Dichteregister — 5
7 — Vergleicher
A
B
< — S
≧ — W
Dichtewertreg. — 6
Dateneingabe

## Fig. 4

Multiplexer
S — 1A
W — 2A
1B
2B
8
1y
2y
Selektion ob die Maske SW oder WS ist
SW-Wert-Zähler
Up
T_S — Down
Bor
9
T Start 1 (startet die Steuerfunktion)
SW-Wert-Reg.
12
Up — Car
WS-Wert-Zähler — 10

Fig. 5

Schieberegister

S

TSR

13

PROM oder RAM

A

$a_2$
$a_3$
$a_1$

14

Multiplexer

15

1A
2A
1B
2B

1y
2y

Selektion ob die Maske SW oder WS ist

16

Up   SW-Wert-Zähler
Down          Bor

$T_S$

T Start 1 (startet die Steuerfunktion)

SW-Wert-Reg.

17

EP 0 187 837 B1

Fig. 6

EP 0 187 837 B1

Schreibadressen für
Adresszähler 20 Fig. 9

$2^{15}$        $2^0$

Multiplexer

Strangadressen –
Zähler        *18*

S → 1A

W → 2A

1B

2B

1y

2y

$T_S$

Up    SW-Wert –
           Zähler

Down        *16*

T Start 2
(startet die Steuerfunktion)

Up        Car

WS-Wert-Zähler        *10*

beendet die Maskenabtastung

Selektion ob
die Maske
SW oder WS ist

*8*

## Fig. 7

Fig. 8a

| | 8 | 7 | 6 | 5 | 4 | 3 | 2 | 1 | 0 | |
|---|---|---|---|---|---|---|---|---|---|---|
| | 1 | 1 | 1 | 1 | 1 | 1 | 1 | 1 | 1 | SW-Wert |
| | 1 | 1 | 0 | 1 | 1 | 0 | 1 | 1 | 0 | SW-Wert |
| | 1 | 1 | 0 | 0 | 0 | 0 | 0 | 1 | 0 | SW-Wert |
| | 1 | 0 | 0 | 0 | 0 | 0 | 0 | 0 | 0 | WS-Wert |

Schreibadressen für
Adresszähler 20 Fig. 9

Strangadressen-Zähler

$2^0$

$2^{15}$

18

T Start 2
(startet die Steuerfunktion)

SW-Wert-Zähler

Up   Down   Bor

16

$T_S$

W beendet die Maskenabtastung

Multiplexer

1y   2y

1A   2A   1B   2B

15

Selektion ob
die Maske
SW oder WS ist

PROM
oder
RAM

$Q_2$
$Q_3$
$Q_1$

14

Schieberegister

13

S

Fig. 8

13

Fig. 9

Abtasten der zu mischenden Daten

Fig. 10